**Europäisches Patentamt**

**European Patent Office**

**Office européen des brevets**

(19)

(11) Numéro de publication : **0 335 755 B1**

(12)

# FASCICULE DE BREVET EUROPEEN

(45) Date de publication du fascicule du brevet :
**08.04.92 Bulletin 92/15**

(51) Int. Cl.⁵ : **H02G 5/08**

(21) Numéro de dépôt : **89400310.2**

(22) Date de dépôt : **03.02.89**

(54) **Dispositif de sécurité pour les connecteurs de dérivation des canalisations électriques.**

(30) Priorité : **31.03.88 FR 8804262**

(43) Date de publication de la demande :
**04.10.89 Bulletin 89/40**

(45) Mention de la délivrance du brevet :
**08.04.92 Bulletin 92/15**

(84) Etats contractants désignés :
**DE ES GB IT**

(56) Documents cités :
**DE-A- 2 917 112**
**FR-A- 1 247 444**
**US-A- 3 107 283**

(73) Titulaire : **TELEMECANIQUE**
**43-45 Boulevard Franklin Roosevelt**
**F-92500 Rueil-Malmaison (FR)**

(72) Inventeur : **Garcia, José**
**2, Rue Jean-Baptiste Baudin**
**F-21000 Dijon (FR)**
Inventeur : **Jego, Gérard**
**12, Rue Louis-Pasteur**
**F-21470 Brazey en Plaine (FR)**
Inventeur : **Teinturier, Jean-Yves**
**6, Allée des Meix Domois**
**F-21600 Longvic (FR)**
Inventeur : **Thierry, Jean-Pierre**
**36, Rue des espaces verts**
**F-21560 Couternon (FR)**

(74) Mandataire : **Marquer, Francis et al**
**Cabinet Moutard 35, Avenue Victor Hugo**
**F-78960 Voisins le Bretonneux (FR)**

## Description

La présente invention concerne un dispositif de sécurité pour les connecteurs de dérivation des systèmes de distribution électrique qui sont largement utilisés dans les usines et dans les ateliers. De tels connecteurs sont destinés à être branchés sur une canalisation formée d'un conduit métallique qui contient des barres conductrices avec interposition d'isolateurs. Ils sont constitués par un fond muni de pinces et de plots de contact, et par un couvercle fixé sur le fond au moyen de deux vis.

Pour des raisons de sécurité évidentes, il est impératif d'interdire le branchement d'un tel connecteur lorsque son couvercle n'est pas posé et que les conducteurs sous tension qu'il renferme sont accessibles.

A cette fin, la canalisation est munie d'une trappe dont l'ouverture est commandée par un doigt solidaire du fond du boîtier du connecteur de dérivation. Lorsque le couvercle est mis, un poussoir agit sur ce doigt qui vient en saillie et qui est alors susceptible d'ouvrir la trappe.

Au contraire, lorsque le couvercle n'est pas mis, deux parties plates encadrant le doigt viennent en contact avec deux surfaces également plates de la trappe dont l'ouverture est alors impossible.

Cette solution connue présente l'inconvénient que, lorsque le couvercle n'est pas en place, le doigt spécifié ci-dessus peut être poussé manuellement de façon malencontreuse, de sorte qu'il est alors possible de brancher le connecteur sans son couvercle, avec tous les risques d'accident que cela suppose.

Aussi, le but de la présente invention est-il, dans un connecteur de dérivation du genre en question, de pallier cet inconvénient et de proposer un dispositif de sécurité qui assure de manière totalement fiable la protection des personnes contre le contact direct avec les conducteurs du connecteur lors de l'embrochage de celui-ci.

Selon l'invention, ce but, ainsi que d'autres qui apparaîtront par la suite, comme le faible coût et la simplicité de l'appareillage, sont atteints grâce à un dispositif de sécurité du genre spécifié ci-avant qui est caractérisé par le fait qu'il comporte une butée mobile entre une position de branchement dans laquelle elle est effacée pour l'essentiel à l'intérieur du fond et une position où elle fait saillie hors du fond d'une longueur suffisante pour interdire le branchement ; un organe de blocage empêchant cette butée de passer à sa position de branchement lorsque le couvercle n'est pas en place ; et des moyens pour effacer cet organe de blocage lors de la pose du couvercle.

On comprend qu'il faut agir sur l'organe de blocage selon l'invention pour que la butée du dispositif de sécurité s'efface et passe dans sa position qui autorise le branchement, ce qui évite les risques d'accident par manipulation malencontreuse de la butée.

Selon une forme de réalisation avantageuse du dispositif de sécurité selon l'invention, sa butée n'est autre que l'une des vis de fixation du couvercle du connecteur sur son fond, ces vis étant montées, comme on le sait, depuis le fond du connecteur pour obliger à débrancher ce dernier avant de démonter son couvercle. Cette disposition économise un organe et, surtout, elle garantit l'actionnement automatique de la butée lors du dévissage du couvercle.

Il est toutefois possible d'utiliser une butée spéciale car, dans les deux cas, la butée du dispositif selon l'invention est avantageusement rappelée vers sa position d'interdiction de branchement par un ressort de compression.

Ceci veut dire que, dans la position de branchement, la vis servant de butée est à l'intérieur du connecteur, à l'exception de sa tête, du fait qu'elle est vissée dans le couvercle, alors que, s'il s'agit d'une butée spéciale, elle est poussée dans le connecteur, à l'encontre du ressort, par appui sur la canalisation.

Avantageusement, la butée en question coulisse dans un tube qui s'étend à l'intérieur du connecteur à partir de la base de son fond et perpendiculairement à cette base.

Quant à l'organe de blocage spécifié ci-avant, il appartient de préférence à une agrafe élastique qui pourrait par exemple pénétrer transversalement dans le tube ci-dessus dans la position d'interdiction de branchement et en être effacé latéralement par pliage élastique.

Toutefois, dans une forme de réalisation préférée, cette agrafe élastique présente la forme générale d'un U dont une branche est montée dans un support solidaire du fond et dont l'autre branche pénètre dans le tube à travers une fente longitudinale sous l'effet de l'élasticité de l'agrafe, son extrémité libre étant dirigée vers la butée lorsque celle-ci est en position d'interdiction de branchement.

Lorsqu'on veut la faire passer en position de branchement sans que le couvercle soit posé, la butée se bloque alors par son extrémité contre la pointe de l'agrafe qui ne peut s'échapper du fait de la présence du tube.

Pour l'amener à s'effacer, il faut faire intervenir des moyens appropriés, lesquels comprennent avantageusement une patte d'actionnement qui est solidaire du couvercle et qui, lorsque ce dernier est en place, est interposée entre la branche libre de l'agrafe et le tube dans lequel coulisse la butée.

On comprend que, lorsqu'on monte le couvercle, sa patte d'actionnement replie la branche libre de l'agrafe vers sa branche fixe, ce qui dégage le tube dans lequel la butée peut alors coulisser librement jusqu'à sa position de branchement.

D'autre part, le repliement de la branche libre de l'agrafe ne peut pas avoir lieu manuellement par accident s'il est impossible de passer un doigt entre le tube de coulissement de la butée et le support de l'agrafe, ce qui interdit de faire sortir du tube la branche libre de cette dernière.

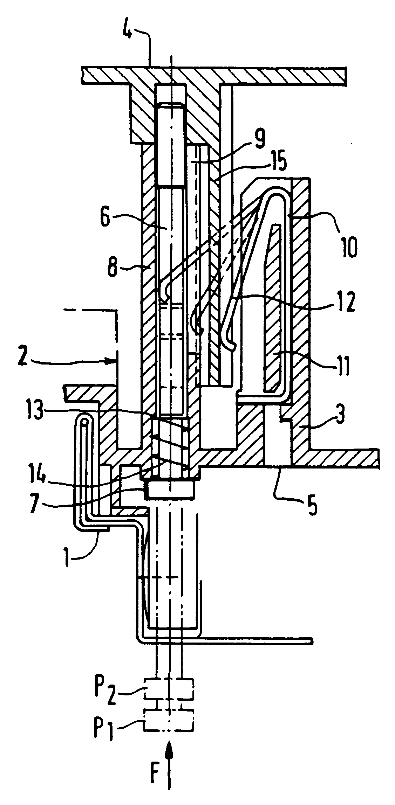

La description qui va suivre, et qui ne présente aucun caractère limitatif, permettra de bien comprendre comment la présente invention peut être mise en pratique. Elle doit être lue en regard du dessin annexé dont la figure unique montre une vue en coupe du dispositif de sécurité selon la présente invention.

Sur cette figure, le repère 1 désigne une canalisation d'un système de distribution d'électricité classique sur laquelle est branché un connecteur de dérivation désigné dans son ensemble par le repère 2. Cette canalisation 1 et ce connecteur 2 sont bien connus et ils ne font pas partie de la présente invention en tant que tels, de sorte qu'ils ont été représentés de manière schématique.

Le connecteur 2 comprend un fond 3 qui est situé du côté de la canalisation 1 et sur lequel un couvercle 4 est fixé au moyen de vis, ces dernières étant vissées depuis la base 5 du fond 3 pour que l'on ne puisse pas les enlever, et donc détacher le couvercle 4, lorsque le connecteur 2 est branché.

Parmi ces vis de fixation du couvercle, une seule, 6, a été représentée sur la figure, car, dans la forme de réalisation qui est ici décrite, elle constitue une partie essentielle du dispositif de sécurité selon l'invention.

La vis 6 est une vis imperdable et, dans sa position montée qui est représentée sur la figure, sa tête 7 s'appuie sur un épaulement annulaire de la base 5 du fond 3. Elle traverse ce dernier et elle s'étend ensuite dans un tube 8 qui est perpendiculaire à la base 5 du fond 3 et dirigé vers le couvercle 4. Son extrémité opposée à sa tête 7 fait saillie hors du tube 8 et elle est vissée dans le couvercle 4.

Le tube 8 présente une fente longitudinale 9 en regard d'une agrafe élastique 10 dont la forme générale est celle d'un U ouvert du côté du fond 3, dont l'une des branches est maintenue dans un support 11 et dont l'autre branche 12 est poussée par son élasticité vers la fente 9 du tube 8.

Enfin, le tube 8 présente une portion de diamètre légèrement plus important entre son extrémité du côté de la base 5 du fond 3 et la fente 9, un épaulement 13 étant ainsi ménagé entre ses deux portions de diamètre différent. Un ressort de compression 14 est logé dans cette portion élargie du tube 8, entre cet épaulement 13 et la tête 7 de la vis 6, et il tend à pousser cette dernière vers l'extérieur du fond 3.

Le couvercle 4 comporte une patte d'actionnement 15 qui, dans la position montée représentée sur la figure, s'étend entre la fente longitudinale 9 du tube 8 et la branche libre 12 de l'agrafe élastique 10, cette branche 12 s'appuyant sur la patte 15 sous l'effet de l'élasticité de l'agrafe 10.

Au contraire, si l'on défait la vis 6, de sorte que, sous l'effet du ressort de compression 14, elle prend la position P1 représentée en traits interrompus sur la figure, et si on enlève le couvercle 4 avec sa patte 15, la branche libre 12 de l'agrafe 10 pénètre dans le tube 8 par la fente longitudinale 9, ainsi que cela est également représenté en traits interrompus sur la figure.

Si alors on pousse la tête 7 de la vis 6 dans le sens de la flèche F, ce qui tend à faire rentrer la vis dans le fond 3 à l'encontre du ressort 14, cette vis se trouve rapidement bloquée dans sa course par l'extrémité de la branche 12 de l'agrafe 10, dans la position P2 de la figure.

Dans cette position P2, la longueur de la portion de la vis 6 qui fait saillie hors du fond 3 et qui forme une butée, est telle que le branchement du connecteur 2 sur la canalisation 1 est impossible, de sorte que ce dispositif de sécurité joue parfaitement son rôle qui est, on le sait, d'interdire ce branchement tant que le couvercle 4 n'est pas posé sur le fond 3.

Au contraire, si l'on met en place ce couvercle, sa patte 15 repousse la branche 12 de l'agrafe 10 dans la position représentée en traits pleins sur la figure, et la vis 6 peut alors rentrer complètement dans le tube 8, de sorte que la butée qu'il forme s'efface et que le branchement du connecteur 2 peut avoir lieu.

On notera encore que l'extrémité de la branche libre 12 de l'agrafe 10 est légèrement recourbée pour éviter son coincement entre la vis 6 et le tube 8.

D'autre part, la distance entre ce tube 8 et le support 11 de l'agrafe 10 est de préférence assez faible pour que l'on ne puisse pas introduire accidentellement un doigt dans cet intervalle, ce qui effacerait la branche libre 12 et permettrait à la vis 6 de passer en position de branchement sans que le couvercle 4 soit posé.

Dans l'exemple de réalisation qui vient d'être décrit et qui est représenté sur la figure, c'est l'une des vis de fixation 6 du couvercle 4 qui sert de butée d'interdiction du branchement. On rappellera toutefois que l'on pourrait utiliser une butée spéciale de forme analogue à celle de la vis 6 qui n'aurait aucun rôle de fixation.

Dans ce cas, lorsque le couvercle 4 est posé et que, par voie de conséquence, la branche 12 de l'agrafe 10 est rétractée, ce n'est pas son vissage dans le couvercle 4 qui amène la butée à se rétracter dans le fond 3, mais son appui à force sur la canalisation 1, toujours à l'encontre du ressort de compression 14.

## Revendications

1. Dispositif de sécurité pour les connecteurs de dérivation des systèmes de distribution électrique comprenant un fond (3) et un couvercle (4) et destinés à être branchés sur une canalisation (1), caractérisé par le fait qu'il comporte une butée (6) mobile entre une position de branchement dans laquelle elle est effacée pour l'essentiel à l'intérieur du fond (3) et une position où elle fait saillie hors du fond (3) d'une longueur suffisante pour interdire le branchement; un organe de blocage (10) empêchant ladite butée (6) de passer à sa position de branchement lorsque le couvercle (4) n'est pas en place; et des moyens (15) pour effacer ledit organe de blocage (10) lors de la pose du couvercle (4).

2. Dispositif de sécurité selon la revendication 1, caractérisé par le fait que ladite butée (6) est une vis de fixation du couvercle (4) sur le fond (3).

3. Dispositif de sécurité selon la revendication 2, caractérisé par le fait que ladite vis (6) est une vis imperdable.

4. Dispositif de sécurité selon l'une quelconque des revendications 1 à 3, caractérisé par le fait que ladite butée (6) est rappelée vers sa position d'interdiction de branchement par un ressort de compression (14).

5. Dispositif de sécurité selon l'une quelconque des revendications 1 à 4, caractérisé par le fait que ladite butée (6) coulisse dans un tube (8) qui s'étend à l'intérieur du connecteur (2) à partir de la base (5) de son fond (3) et perpendiculairement à cette base.

6. Dispositif de sécurité selon la revendication 5, caractérisé par le fait que ledit organe de blocage (10) est poussé dans ledit tube (8) lorsque ladite butée (6) est en position d'interdiction de branchement.

7. Dispositif de sécurité selon la revendication 6, caractérisé par le fait que ledit organe de blocage appartient à une agrafe élastique (10).

8. Dispositif de sécurité selon la revendication 7, caractérisé par le fait que ladite agrafe élastique (10) présente la forme générale d'un U dont une branche est montée dans un support (11) solidaire du fond (3) et dont l'autre branche (12) pénètre dans ledit tube (8) à travers une fente longitudinale (9) sous l'effet de l'élasticité de l'agrafe (10), son extrémité libre étant dirigée vers ladite butée (6) lorsque celle-ci est en position d'interdiction de branchement.

9. Dispositif de sécurité selon la revendication 8, caractérisé par le fait que lesdits moyens pour effacer l'organe de blocage (12) comprennent une patte d'actionnement (15) qui est solidaire du couvercle (4) et qui, lorsque ce dernier est en place, est interposée entre la branche libre (12) de ladite agrafe (10) et ledit tube (8).

10. Dispositif de sécurité selon l'une quelconque des revendications 8 et 9, caractérisé en ce que l'intervalle entre ledit tube (8) et le support (11) de ladite agrafe (10) est assez faible pour que l'on ne puisse pas y introduire accidentellement un doigt.

**Patentansprüche**

1. Sicherheitsvorrichtung für Shuntverbinder für elektrische Verteilersysteme, mit einem Boden (3) und einem Deckel (4), die an einen Kanal (1) angeschlossen werden, dadurch gekennzeichnet, dass sie einen Anschlag (6) aufweist, welcher beweglich ist zwischen einer Verbindungsposition, in der er im wesentlichen in den Boden (3) eingezogen ist und einer Stellung, in der er aus dem Boden (3) genügend herausragt, um eine Verbindung unmöglich zu machen, ein Verriegelorgan (10), welches verhindert, dass besagter Anschlag (6) sich in die Verbindungsposition bewegt, wenn der Deckel (4) nicht montiert ist, und Mittel (15), um besagtes Verriegelungsorgan (10) beim Aufsetzen des Deckels (4) rückzustellen.

2. Sicherheitsvorrichtung nach Anspruch 1, dadurch gekennzeichnet, dass besagter Anschlag (6) eine Schraube zur Befestigung des Deckels (4) auf dem Boden (3) ist.

3. Sicherheitsvorrichtung nach Anspruch 2, dadurch gekennzeichnet, dass besagte Schraube (6) unverlierbar ist.

4. Sicherheitsvorrichtung nach einem der Ansprüche 1 bis 3, dadurch gekennzeichnet, dass besagter Anschlag (6) durch eine Druckfeder (14) in seine Stellung, wo er die Verbindung verhindert rückgestellt wird.

5. Sicherheitsvorrichtung nach einem der Ansprüche 1 bis 4, dadurch gekennzeichnet, dass besagter Anschlag (6) in einem Rohr (8) gleitet, welches sich innerhalb des Verbinders (2) von der Basis (5) des Bodens (3) ausgehend senkrecht zu besagter Basis erstreckt.

6. Sicherheitsvorrichtung nach Anspruch 5, dadurch gekennzeichnet, dass besagtes Verriegelungsorgan, in besagtes Rohr (8) hineingedrückt wird, wenn der Anschlag (6) sich in der Stellung wo er eine Verbindung verhindert befindet.

7. Sicherheitsvorrichtung nach Anspruch 6, dadurch gekennzeichnet, dass besagtes Verriegelungsorgan Teil einer elastischen Klammer (10) ist.

8. Sicherheitsvorrichtung nach Anspruch 7, dadurch gekennzeichnet, dass besagte elastische Klammer (10) die allgemeine Form eines U hat, dessen erster Schenkel in einen fest mit dem Boden (3) verbundenen Träger (11) montiert ist und dessen anderer Schenkel (12) unter der Wirkung der Elastizität der Klammer (10) durch einen Längsschlitz (9) in besagtes Rohr (8) eindringt und ihr freies Ende gegen besagten Anschlag (6) gerichtet ist, wenn dieser sich in der Stellung befindet, wo er eine Verbindung verhindert.

9. Sicherheitsvorrichtung nach Anspruch 8, dadurch gekennzeichnet, dass besagte Mittel, um das Verriegelungsorgan (12) rückzustellen einen mit dem Deckel (4) fest verbundene Betätigungslasche (15) aufweisen, die, wenn der Deckel aufgesetzt ist, zwischen dem freien Schenkel (12) der besagten Klammer (10) und besagtem Rohr (8) angeordnet ist.

10. Sicherheitsvorrichtung nach einem der Ansprüche 8 und 9, dadurch gekennzeichnet, dass der Zwischenraum zwischen besagtem Rohr (8) und dem Träger (11) klein genug ist, damit nicht möglicherweise ein Finger hineingesteckt werden kann.

said tube (8) and the support (11) of said clip (10) is fairly small so that a finger cannot be accidentally inserted therein.

## Claims

1. A safety device for shunt connectors of electric distribution systems comprising a bottom (3) and a cover (4) and intended to be connected to a conduit (1), characterized in that it comprises a stop (6) movable between a connection position in which it is retracted largely inside the bottom (3) and a position in which it projects from the bottom (3) by a length sufficient to prevent connection ; a locking member (10) preventing said stop (6) from passing to its connection position when the cover (4) is not fitted ; and means (15) for retracting this locking member (10) during fitting of the cover (4).

2. The safety device as claimed in claim 1, characterized in that said stop (6) is a screw fixing the cover (4) to the bottom (3).

3. The safety device as claimed in claim 2, characterized in that said screw (6) is a screw which cannot be lost.

4. The safety device as claimed in anyone of claims 1 to 3, characterized in that said stop (6) is returned to its position preventing connection by a compression spring (14).

5. The safety device as claimed in anyone of claims 1 to 4, characterized in that said stop (6) slides in a tube (8) which extends inside the connector (2) from the base (5) of its bottom (3) and perpendicularly to this base.

6. The safety device as claimed in claim 5, characterized in that said locking member (10) is pushed into said tube (8) when said stop (6) is in a position preventing connection.

7. The safety device as claimed in claim 6, characterized in that said locking member belongs to a resilient clip (10).

8. The safety device as claimed in claim 7, characterized in that said resilient clip (10) has the general shape of a U, one leg of which is mounted in a support (11) integral with the bottom (3) and the other leg (12) of which penetrates into said tube (8) through a longitudinal slit (9) under the effect of the resilience of the clip (10), its free end being directed towards said stop (6) when the latter is in a position preventing connection.

9. The safety device as claimed in claim 8, characterized in that said means for retracting the locking member (12) comprise an actuation lug (15) which is integral with the cover (4) and which, when the latter is in position, is inserted between the free leg (12) of said clip (10) and said tube (8).

10. The safety device as claimed in anyone of claims 8 and 9, characterized in that the gap between